# FASCICULE DE BREVET EUROPEEN

(11) **EP 3 451 797 B1**
(45) Date de publication et mention de la délivrance du brevet: **21.07.2021**
(21) Numéro de dépôt: 18187035.3
(22) Date de dépôt: 02.08.2018
(51) Int. Cl.: H05B 45/50

(54) **DISPOSITIF DE PILOTAGE DE L' ALIMENTATION DE SOURCES LUMINEUSES COMPRENANT PLUSIEURS ENTREES PROTEGEES**
STEUERVORRICHTUNG DER STROMZUFÜHRUNG ZU LEUCHTQUELLEN, DIE MEHRERE GESCHÜTZTE EINGÄNGE UMFASST
DEVICE FOR CONTROLLING THE POWER SUPPLY OF LIGHT SOURCES COMPRISING A PLURALITY OF PROTECTED INPUTS

(30) Priorité: 31.08.2017 FR 1758033
(43) Date de publication de la demande: 06.03.2019
(73) Titulaire: Valeo Vision, 93012 Bobigny Cedex (FR)
(72) Inventeur: WACHEUX, Patrick, 93012 BOBIGNY Cedex (FR); DROUIN, Sylvestre, 93012 BOBIGNY Cedex (FR)
(74) Mandataire: Valeo Visibility

(56) Documents cités:
- US-A1- 2012 032 591
- US-A1- 2017 013 694

## Description

L'invention se rapporte aux dispositifs de pilotage de l'alimentation électrique de sources lumineuses, notamment pour véhicules automobiles. L'invention concerne en particulier un dispositif de pilotage pour l'alimentation de plusieurs diodes électroluminescentes, LED, le dispositif présentant plusieurs entrées d'alimentation.

Une diode électroluminescente, LED, est un composant électronique semi-conducteur capable d'émettre de la lumière d'une longueur d'onde prédéterminée lorsqu'il est parcouru par un courant électrique d'une intensité prédéterminée. Au-delà d'une valeur seuil appelée courant direct, l'intensité du flux lumineux émis par une LED augmente en général avec l'intensité du courant électrique d'alimentation. Leur petite taille et leur faible consommation en électricité rendent les composants LED intéressants dans le domaine des modules lumineux pour véhicules automobiles. Des sources lumineuses de type LED peuvent par exemple être utilisées pour réaliser des signatures optiques distinctives en plaçant les composants le long de contours prédéterminés. En utilisant des composants LED, la réalisation de feux à fonctions lumineuses multiples est également facilitée. Un même feu peut par exemple réaliser une fonction feu de jour, DRL (« daytime running light »), et participer à une fonction clignotant, TI (« turn indicator »), en plaçant différents composants LED émettant de la lumière aux couleurs appropriées proches les unes des autres au sein du module lumineux qui réalise le feu en question. Les différentes fonctions lumineuses ont des besoins différents en termes d'alimentation électrique. En effet, chaque fonction lumineuse se différencie entre autres par une intensité lumineuse réglementaire qu'il faut satisfaire.

Afin de garantir une alimentation électrique adaptée pour les sources lumineuses réalisant une fonction lumineuse donnée d'un véhicule automobile, il est connu d'utiliser un dispositif de pilotage comprenant notamment un convertisseur à découpage. Afin de satisfaire aux besoins d'alimentation électrique des différentes sources lumineuses d'un véhicule, un même dispositif de pilotage peut de manière connue comprendre plusieurs entrées d'alimentation par lesquelles des courants électriques issus de différentes sources de courant peuvent être fournis de manière sélective au dispositif de pilotage. Il est également connu d'utiliser un montage de protection contre des inversions de courant sur une entrée d'alimentation d'un tel dispositif de pilotage. Des inversions de courant peuvent par exemple se produire lors du remplacement de la batterie d'un véhicule automobile, qui représente la source primaire d'énergie électrique au sein du véhicule. Un montage de protection peut selon l'état de l'art être réalisé moyennant au moins un transistor à effet de champ dopé P de type MOSFET (« métal oxide field effect transistor »). Si la batterie du véhicule automobile est connectée correctement, le transistor conduit sans avoir besoin d'un pilotage spécifique. Cependant, dans des conditions de courant inverse, la diode intrinsèque du transistor MOSFET empêche le transistor d'être conducteur, protégeant ainsi le dispositif de pilotage.

Sur le réseau électrique d'un véhicule automobile transitent de manière sporadique des pics de courant ou pulses parasites, qui peuvent surgir de manière indépendante par rapport au fonctionnement du dispositif de pilotage de l'alimentation des sources lumineuses. Ces pics peuvent présenter des chutes de tension de l'ordre de 100V sur un laps de temps d'environ 2ms, ce qui est en général supérieur à la tension de claquage du transistor de protection MOSFET. Afin de protéger ce dernier par rapport au risque de destruction posé par les pics transitoires, il a été proposé de brancher une capacité entre les terminaux grille et source du transistor, retardant ainsi un changement de l'état fermé du transistor vers l'état ouvert. Si un pic transitoire intervient, l'énergie du pic peut traverser le transistor qui reste fermé pendant un laps de temps prédéterminé par le dimensionnement de la capacité. L'énergie du pic est absorbée partiellement par le filtre d'entrée du convertisseur à découpage, et lorsque le transistor s'ouvre, l'énergie résiduelle du pic transitoire a en général acquis un niveau suffisant pour garantir le bon fonctionnement du transistor MOSFET en question.

Cette architecture pose néanmoins des problèmes, notamment lorsque le dispositif de pilotage de l'alimentation électrique des sources lumineuses est opéré moyennant plusieurs entrées. Lors d'un changement de fonction lumineuse du véhicule automobile la situation suivante peut dès lors intervenir. Lorsqu'une première entrée passe d'un état alimenté vers un état non-alimenté (le MOSFET de protection de la première entrée passe à l'état ouvert avec un délai) tandis qu'une deuxième entrée passe d'un état non-alimenté vers un état alimenté (le MOSFET de protection de la deuxième entrée passe à l'état fermé), la deuxième entrée réinjecte du courant électrique vers la première entrée pendant le délai d'ouverture du premier MOSFET. En effet, pendant le délai d'ouverture, les transistors de protection des deux entrées restent fermés. Cette situation commune génère un défaut au niveau d'un organe de diagnostic du véhicule automobile, ce qui n'est pas désirable.

Le document US2017/013694 A1 décrit un circuit pour alimenter des sources lumineuses et comportant deux entrées d'alimentation et des circuits de protection associés à ces entrées. Chaque circuit de protection comporte un interrupteur et un circuit capable de déterminer si une alimentation est fournie sur l'entrée d'alimentation associée sur la base d'une oscillation fournie par une unité de contrôle.

L'invention a pour objectif de pallier à au moins un des problèmes posés par l'art antérieur. Plus précisément, l'invention a pour objectif de proposer un dispositif de pilotage de l'alimentation électrique d'au moins une source lumineuse d'un véhicule automobile, le dispositif comprenant plusieurs entrées d'alimentation protégées par des montages de protection à l'encontre d'inversions de courants et à l'encontre de pics d'énergie transitoires intempestifs, qui évite la génération de signaux de défauts au niveau d'un organe de diagnostic du véhicule automobile lors de son fonctionnement normal.

L'invention a pour objet un dispositif de pilotage de l'alimentation électrique d'au moins une source lumineuse d'un module lumineux d'un véhicule automobile tel que défini par la revendication 1. Le dispositif comprend :
- au moins une première et une deuxième entrée d'alimentation, chaque entrée étant soit dans un état alimenté ou non-alimenté, et au moins l'une des première et deuxième entrées comprenant un montage de protection contre des inversions de courant, le montage ayant au moins un interrupteur de protection et une capacité pour générer un retard d'une première durée dans le changement d'état dudit interrupteur, et
- une unité de détection destinée à détecter un changement de l'état d'une entrée.

Le dispositif de pilotage est remarquable en ce que le dispositif comprend une unité de commande configurée pour commander l'ouverture de l'interrupteur de protection d'une entrée (110, 210) lorsque l'unité de détection détecte un changement de l'entrée correspondante vers l'état non-alimenté.

De préférence, l'au moins un interrupteur de protection peut-être un transistor à effet de champ, la capacité du montage de protection étant branchée sur les terminaux grille et source du transistor. Il peut avantageusement s'agir d'un transistor à effet de champ dopé P.

Au moins l'une des première et deuxième entrées comprend en outre un montage d'ouverture rapide dudit interrupteur de protection, destiné à réduire de manière sélective le retard dans le changement d'état de l'interrupteur. De plus, l'unité de commande est configurée pour actionner le montage d'ouverture rapide lorsque l'unité de détection détecte un changement de l'entrée correspondante vers l'état non-alimenté.

Le montage d'ouverture rapide peut de préférence comprendre des transistors et des résistances. De Manière préférée, le montage d'ouverture rapide peut comprendre essentiellement des transistors et des résistances et optionnellement au moins une diodes Zener.

De préférence, le dispositif peut comprendre un interrupteur monté de manière à court-circuiter de manière sélective les terminaux de la capacité du montage de protection. L'interrupteur peut avantageusement être réalisé par au moins un transistor.

L'unité de commande peut préférentiellement comprendre un élément microcontrôleur.

De manière préférée, l'élément microcontrôleur est configuré pour fermer ledit interrupteur pour court-circuiter les terminaux de ladite capacité du montage de protection lorsque l'unité de détection détecte un changement de l'entrée correspondante vers l'état non-alimenté.

De préférence, l'élément microcontrôleur peut être configuré pour fermer l'interrupteur du montage d'ouverture rapide lorsque l'unité de détection détecte un changement de l'entrée correspondante vers l'état non-alimenté, de manière à court-circuiter les terminaux de la capacité du montage de protection.

L'unité de détection peut de préférence comprendre un élément microcontrôleur configuré pour recevoir et interpréter des commandes destinées au module lumineux sur un réseau de bord du véhicule automobile.

De préférence, l'unité de détection peut comprendre un circuit électronique configuré pour détecter une chute de l'intensité du courant électrique d'une valeur non-nulle à une valeur nulle sur au moins une entrée du dispositif. De manière préférée, l'unité de détection peut comprendre un circuit électronique configuré pour détecter une chute de tension électrique sur au moins une entrée du dispositif, le circuit électronique comprenant préférentiellement un montage diviseur résistif.

La durée du retard est de l'ordre de plusieurs millisecondes, l'ouverture de l'interrupteur de protection par l'unité de commande, par l'actionnement du montage d'ouverture rapide, réduit le retard dans le changement d'état de l'interrupteur de protection à l'ordre de plusieurs microsecondes.

Le dispositif peut de préférence comprendre au moins un circuit convertisseur destiné à convertir le courant électrique qui alimente une des entrées du dispositif en un courant électrique d'intensité adaptée pour l'alimentation électrique d'au moins une source lumineuse d'un module lumineux d'un véhicule automobile.

De préférence, il peut s'agir d'un circuit convertisseur à découpage, par exemple de type abaisseur (« buck »), élévateur (« boost ») ou SEPIC (« single ended primary inductor converter »).

L'invention a également pour objet un module lumineux pour un véhicule automobile. Le module comprend au moins une source lumineuse et un dispositif de pilotage de l'alimentation électrique desdites sources lumineuses. Le module lumineux est remarquable en ce que le dispositif de pilotage est conforme au dispositif de pilotage selon la présente invention.

Les sources lumineuses peuvent de préférence être des composants semi-conducteurs à émission lumineuse. Il peut par exemple s'agir de diodes électroluminescentes, LED, de diodes électroluminescentes organiques, OLED, ou de diodes laser.

En utilisant les mesures proposées par la présente invention, il devient possible de proposer un dispositif de pilotage de l'alimentation électrique d'au moins une source lumineuse d'un véhicule automobile, le dispositif comprenant plusieurs entrées d'alimentation protégées par des montages de protection à l'encontre d'inversions de courants et à l'encontre de pics d'énergie transitoires intempestifs, qui évite la génération de signaux de défauts dus à d'éventuels réinjections de courant entre les entrées du dispositif au niveau d'un organe de diagnostic du véhicule automobile lors de son fonctionnement normal. L'invention utilise un montage d'ouverture rapide des transistors de protection à l'encontre des inversions de courant. Ce montage est destiné à réduire de manière sélective le délai de protection à l'encontre de pics d'énergie transitoires lorsque le changement d'état de l'entrée est volontaire, par exemple puisqu'il est dû à une mise en œuvre d'un changement de fonction lumineuse du véhicule automobile. Le montage d'ouverture rapide permet de court-circuiter les terminaux de la capacité qui protège le transistor de protection MOSFET de manière sélective. De cette façon, la protection conférée par la capacité à l'encontre de chutes de tensions intempestives dues à des pics transitoires reste garantie. Cependant, la protection conférée par la capacité est désactivée lorsque la chute de tension est volontaire. Ainsi le délai d'ouverture du transistor de protection est réduit et idéalement le transistor s'ouvre de manière quasi-instantanée. Lorsqu'une première entrée du dispositif de pilotage passe de manière volontaire et commandée d'un état alimenté vers un état non-alimenté, le MOSFET de protection de la première entrée passe ainsi à l'état ouvert sans délai substantiel, tandis qu'une deuxième entrée passe d'un état non-alimenté vers un état alimenté. Le MOSFET de protection de la deuxième entrée passe à l'état fermé sans délai, de manière à ce qu'une réinjection de courant électrique entre la deuxième et la première entrée soit évitée.

D'autres caractéristiques et avantages de la présente invention seront mieux compris à l'aide de la description exemplaire et des dessins parmi lesquels :
- la figure 1 donne une illustration schématisée d'un dispositif selon un mode de réalisation préféré de l'invention ;
- la figure 2 donne une illustration schématisée d'un détail d'un dispositif selon un mode de réalisation préféré de l'invention.

Sauf indication spécifique du contraire, des caractéristiques techniques décrites en détail pour un mode de réalisation donné peuvent être combinées aux caractéristiques techniques décrites dans le contexte d'autres modes de réalisation décrits à titre exemplaire et non limitatif. Des numéros de référence similaires seront utilisés pour décrire des concepts semblables à travers différents modes de réalisation de l'invention. Par exemple, les références 100 et 200 désignent deux modes de réalisation d'un dispositif de pilotage selon l'invention.

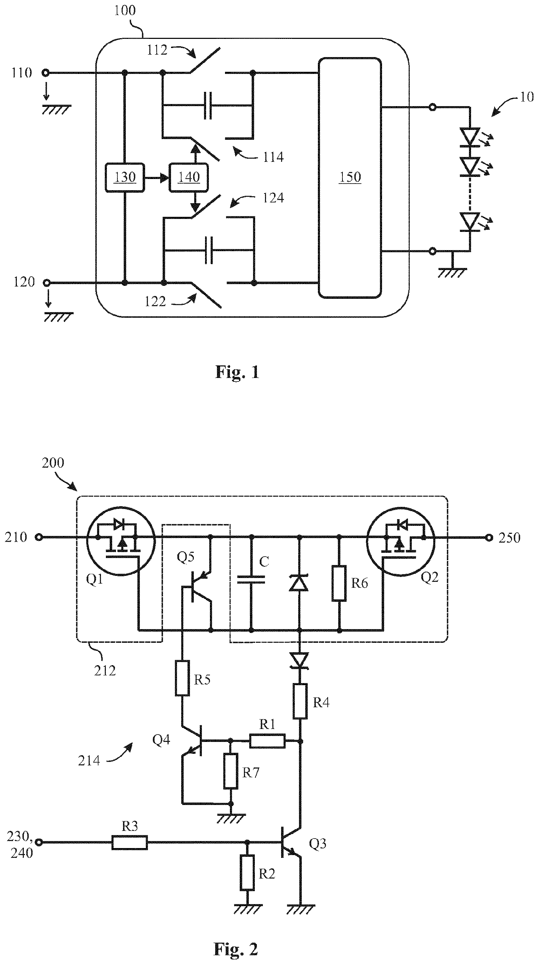

L'illustration de la figure 1 montre un dispositif de pilotage 100 de l'alimentation électrique d'au moins une source lumineuse 10 d'un module lumineux d'un véhicule automobile, selon un mode de réalisation préféré de l'invention. De manière exemplaire et non-limitative, les sources lumineuses 10 sont illustrées comme étant des diodes électroluminescentes, LED. De manière connue, un tel dispositif fait intervenir au moins un circuit convertisseur 150 qui permet de convertir un courant électrique fourni en entrée du dispositif en un courant de charge d'intensité différente, l'intensité du courant de charge étant adaptée à l'alimentation électrique des sources lumineuses 10. Le fonctionnement de circuits convertisseurs exemplaires 150 ne sera pas décrit en détails dans le cadre de la présente invention. Il peut notamment et de manière non-limitative s'agir de convertisseurs à découpage abaisseurs de tension (« buck »), élévateurs de tension (« boost ») ou de type SEPIC (« single ended primary inductor converter »). Selon l'invention, le dispositif de pilotage 100 comprend au moins une première 110 et une deuxième 120 entrée d'alimentation, chaque entrée étant soit dans un état alimenté ou non-alimenté. La figure montre deux entrées, mais l'invention s'étend à des pluralités d'entrées plus nombreuses. Les entrées 110, 120 sont destinées à être alimentées en courant électrique par le biais d'au moins une source de courant interne au véhicule automobile. Chaque entrée comprend un montage de protection 112, 122 contre des inversions de courant, le montage ayant au moins un interrupteur de protection et une capacité pour générer un retard d'une première durée dans le changement d'état dudit interrupteur. Dans l'exemple montré, la capacité est branchée en parallèle avec l'interrupteur du montage de protection 112. La durée du retard est déterminée par les caractéristiques de la capacité. Le dispositif comprend également une unité de détection 130 destinée à détecter un changement de l'état d'une entrée.

A titre exemplaire, l'unité de détection peut comprendre un élément microcontrôleur configuré pour recevoir et interpréter des commandes destinées au module lumineux sur un réseau de bord du véhicule automobile. Lorsque l'élément microcontrôleur intercepte un message de commande impliquant un changement entre deux fonctions lumineuses du véhicule automobile réalisées par le module lumineux moyennant deux sources d'alimentation distinctes, l'élément microcontrôleur en déduit que l'état d'alimentation des entrées 110, 120 change respectivement. De manière alternative, l'unité de détection peut être réalisée par un circuit électronique configuré pour détecter une chute de l'intensité du courant électrique ou de la tension électrique d'une valeur non-nulle à une valeur inférieure, par exemple nulle, sur au moins une entrée du dispositif. La conception de tels circuits électroniques est à la portée de l'homme du métier à partir de la description fonctionnelle qui vient d'être donnée, et leur topologie ne sera pas détaillée davantage dans le cadre de la présente invention.

Dans le mode de réalisation de la figure 1, chacune des entrées 110, 120 comprend en outre un montage d'ouverture rapide 114, 124 dudit interrupteur de protection. Dans d'autres modes de réalisation, au moins une des entrées comprend un tel montage, qui peut également être réduit à un interrupteur. Le montage d'ouverture rapide est destiné à réduire de manière sélective le retard dans le changement d'état de l'interrupteur. Idéalement, l'ouverture de l'interrupteur de protection est instantanée ou quasi-instantanée lorsque le montage d'ouverture rapide est actionné. Dans l'exemple schématisé de la figure 1, le montage d'ouverture rapide est illustré par un interrupteur branché en parallèle à la capacité du montage de protection 112, 122. Lorsque l'interrupteur 114 de la première entrée est dans l'état ouvert, la capacité impose le retard d'une première durée lors de l'ouverture de l'interrupteur de protection du montage 112. Lorsque l'interrupteur 114 de la première entrée est dans l'état fermé, les terminaux de la capacité sont court-circuités et l'ouverture de l'interrupteur de protection du montage 112 peut être réalisé de manière instantanée. Une unité de commande 140, réalisée par exemple par un élément microcontrôleur programmée à cet effet, est configurée pour commander l'ouverture de l'interrupteur de protection 112 de manière rapide. Dans l'exemple de la figure 1, ceci est réalisé en actionnant le montage d'ouverture rapide 114, 124, lorsque l'unité de détection 130, reliée de manière fonctionnelle à l'unité de commande 140, détecte un changement de l'entrée correspondante vers l'état non-alimenté.

La figure 2 montre un schéma de montage détaillé des montages de protection 212 et d'ouverture rapide 214 d'une première entrée d'alimentation 210 d'un dispositif de pilotage 200 de l'alimentation électrique d'au moins une source lumineuse d'un module lumineux d'un véhicule automobile selon un mode de réalisation préféré de l'invention. Des montages de protection et d'ouverture rapide similaires ou identiques sont réalisés sur les autres entrées d'alimentation non-illustrées du dispositif de pilotage 200. Le dispositif de pilotage 200 comprend en outre une unité de détection 230, une unité de commande 240 et au moins un circuit convertisseur 250 non-illustrés, de manière analogue au mode de réalisation décrit en rapport avec l'illustration de la figure 1.

Le montage de protection 212 à l'encontre d'inversions de courant comprend un montage de deux transistors à effet de champ Q1, Q2, dopés P montés tête-bêche, c.-à-d. en connectant leurs terminaux sources respectifs l'un à l'autre, de manière à ce que leur montage s'oppose à la circulation de courant électrique vers le circuit convertisseur 250 lorsqu'un courant de polarité inverse au courant attendu est appliqué à l'entrée 210. Les transistors Q1, Q2 réalisent un interrupteur de protection.

Pour protéger le transistor Q1 de l'impact d'une chute de tension sous forme d'un pulse, impliquant par exemple une chute de -100V sur 2 ms, une capacité C est branchée entre les terminaux grille et source. La capacité C sert à générer un retard d'une première durée dans le changement d'état de l'interrupteur de protection.

Le montage d'ouverture rapide 214 de l'interrupteur de protection comprend dans l'exemple montré deux transistors bipolaires de type NPN Q3 et Q4, ainsi qu'un transistor bipolaire PNP Q5 dont les terminaux collecteur et émetteur sont branchés aux terminaux respectifs de la capacité C du montage de protection 212. Le montage d'ouverture rapide 214 comprend également un ensemble de résistances R1, R2, R3, R4, R5 et R7. Le montage d'ouverture rapide est actionné par l'unité de commande 240 lorsque l'unité de détection 230 détecte un changement d'état volontaire de l'entrée d'alimentation 210 d'un état alimenté vers un état non-alimenté. Dans ce cas, le signal de commande du transistor Q3 descend vers une valeur nulle, ce qui ouvre le transistor Q3. Ainsi, les transistors Q4 et Q5 s'autopilotent via la tension appliquée à l'entrée 210 et deviennent conducteurs, ce qui court-circuite les terminaux de la capacité du montage de protection 212. Ainsi, l'interrupteur de protection Q1, Q2 du montage de protection 212 s'ouvre de manière instantanée.

Lorsque le montage d'ouverture 214 est désactivé, la capacité C impose le retard d'une première durée lors de l'ouverture de l'interrupteur de protection Q1,Q2. Lorsque le montage d'ouverture 214 est activé, les terminaux de la capacité sont court-circuités et l'ouverture de l'interrupteur de protection Q1,Q2 peut être réalisé de manière instantanée. Pour le montage de la figure 2, la durée du premier retard induit par la capacité dans le changement d'état de l'interrupteur de protection est de l'ordre de 10ms, alors que l'interrupteur de protection est ouvert dans un délai d'environ 80 µs moyennant le montage d'ouverture rapide qui vient d'être décrit.

Il va de soi que d'autres circuits électroniques pour la mise en œuvre des montages de protection et d'ouverture rapide peuvent être réalisés par l'homme du métier en se basant sur la description fonctionnelle et les exemples structurels qui viennent d'être décrits et moyennant ses connaissances générales dans la matière, sans pour autant sortir du cadre de la présente invention, qui est délimité par les revendications.

## Revendications

1. Dispositif de pilotage (100, 200) de l'alimentation électrique d'au moins une source lumineuse (10) d'un module lumineux d'un véhicule automobile, comprenant :
- au moins une première (110, 210) et une deuxième (120, 220) entrée d'alimentation, chaque entrée étant soit dans un état alimenté ou non-alimenté, et au moins l'une des première et deuxième entrées comprenant un montage de protection (112, 122 ; 212) contre des inversions de courant, le montage ayant au moins un interrupteur de protection (Q1, Q2) et une capacité (C) pour générer un retard d'une première durée dans le changement d'état dudit interrupteur;
- une unité de détection (130, 230) destinée à détecter un changement de l'état d'une entrée ;
- une unité de commande (140, 240) configurée pour commander l'ouverture de 1 au moins un interrupteur de protection d'une entrée (110, 210) lorsque l'unité de détection détecte un changement de l'entrée correspondante vers l'état non-alimenté, le dispositif de pilotage étant **caractérisé en ce que** au moins l'une des première et deuxième entrées comprend en outre un montage d'ouverture rapide (114, 124 ;214) dudit au moins un interrupteur de protection, destiné à réduire de manière sélective le retard dans le changement d'état de 1 au moins un interrupteur, et **en ce que** l'unité de commande (140, 240) est configurée pour actionner le montage d'ouverture rapide (114, 124 ; 214) lorsque l'unité de détection détecte un changement de l'entrée correspondante vers l'état non-alimenté, et **en ce que** la durée du retard est de l'ordre de plusieurs millisecondes, et **en ce que** l'ouverture de 1 au moins un interrupteur de protection par l'unité de commande (140) réduit le retard dans le changement d'état de 1 au moins un interrupteur de protection à l'ordre de plusieurs microsecondes.

2. Dispositif de pilotage (100, 200) selon la revendication 1, **caractérisé en ce que** l'au moins un interrupteur de protection (Q1, Q2) est un transistor à effet de champ (Q1), la capacité du montage de protection étant branchée sur les terminaux grille et source dudit au moins un transistor.

3. Dispositif de pilotage (100, 200) selon la revendication 1 ou 2, **caractérisé en ce que** le montage d'ouverture rapide comprend des transistors et des résistances.

4. Dispositif de pilotage (100, 200) selon une des revendications 1 à 3, **caractérisé en ce que** le montage d'ouverture rapide (114, 124, 214) comprend un interrupteur (Q5) monté de manière à court-circuiter de manière sélective les terminaux de la capacité (C) du montage de protection (112,122 ; 212).

5. Dispositif de pilotage (100, 200) selon une des revendications 1 à 4, **caractérisé en ce que** l'unité de commande (140, 240) comprend un élément microcontrôleur.

6. Dispositif de pilotage (100, 200) selon les revendications 4 et 5, **caractérisé en ce que** l'élément microcontrôleur est configuré pour fermer ledit interrupteur pour court-circuiter les terminaux de ladite capacité (C) du montage de protection lorsque l'unité de détection (130, 230) détecte un changement de l'entrée correspondante vers l'état non-alimenté.

7. Dispositif de pilotage (100, 200) selon une des revendication 1 à 6, **caractérisé en ce que** l'unité de détection (130, 230) comprend un élément microcontrôleur configuré pour recevoir et interpréter des commandes destinées au module lumineux sur un réseau de bord du véhicule automobile.

8. Dispositif de pilotage (100, 200) selon une des revendications 1 à 6, **caractérisé en ce que** l'unité de détection (130, 230) comprend un circuit électronique configuré pour détecter une chute de l'intensité du courant électrique d'une valeur non-nulle à une valeur nulle sur au moins une entrée du dispositif de pilotage.

9. Dispositif de pilotage (100, 200) selon une des revendications 1 à 8, **caractérisé en ce qu'**il comprend au moins un circuit convertisseur (150, 250) destiné à convertir le courant électrique qui alimente une des entrées du dispositif en un courant électrique d'intensité adaptée pour l'alimentation électrique de ladite au moins une source lumineuse d'un module lumineux d'un véhicule automobile.

10. Module lumineux pour un véhicule automobile comprenant ladite au moins une source lumineuse et un dispositif de pilotage de l'alimentation électrique de ladite au moins une source lumineuse, **caractérisé en ce que** le dispositif de pilotage est conforme à une des revendications 1 à 9.

11. Module lumineux selon la revendication 10, **caractérisé en ce que** ladite au moins une source lumineuse est un composant semi-conducteur à émission lumineuse.

## Patentansprüche

1. Vorrichtung (100, 200) zur Steuerung der elektrischen Versorgung mindestens einer Lichtquelle (10) eines Lichtmoduls eines Kraftfahrzeugs, umfassend:
- mindestens einen ersten (110, 210) und einen zweiten (120, 220) Stromversorgungseingang, wobei sich jeder Eingang entweder in einem stromversorgten oder in einem nicht stromversorgten Zustand befindet, und mindestens einer der ersten und zweiten Eingänge eine Schutzanordnung (112, 122; 212) gegen Stromumkehrungen umfasst, wobei die Anordnung mindestens einen Schutzschalter (Q1, Q2) und eine Kapazität (C) zum Erzeugen einer Verzögerung einer ersten Dauer beim Zustandswechsel des Schalters aufweist;
- eine Erfassungseinheit (130, 230) zum Erfassen einer Änderung des Zustands eines Eingangs
- eine Steuereinheit (140, 240), die so konfiguriert ist, dass sie das Öffnen des mindestens einen Schutzschalters eines Eingangs (110, 210) steuert, wenn die Erfassungseinheit einen Wechsel des entsprechenden Eingangs in den nicht-gespeisten Zustand erfasst,
die Vorrichtung **dadurch gekennzeichnet ist, dass** mindestens einer der ersten und zweiten Eingänge weiterhin eine Schnellöffnungsanordnung (114, 124; 214) des mindestens einen Schutzschalters umfasst, um die Verzögerung beim Zustandswechsel des mindestens einen Schalters selektiv zu verringern, und
dass die Steuereinheit (140, 240) so konfiguriert ist, dass sie die Schnellöffnungsanordnung (114, 124; 214) betätigt, wenn die Erfassungseinheit einen Wechsel des entsprechenden Eingangs in den nicht-erregten Zustand erfasst, und
dass die Dauer der Verzögerung in der Größenordnung von einigen Millisekunden liegt, und dass das Öffnen des mindestens einen Schutzschalters durch die Steuereinheit (140) die Verzögerung beim Zustandswechsel des mindestens einen Schutzschalters auf die Größenordnung von einigen Mikrosekunden reduziert.

2. Steuervorrichtung (100, 200) nach Anspruch 1, **dadurch gekennzeichnet, dass** die Schutzschaltung (212) mindestens einen Feldeffekttransistor Q1 umfasst, wobei die Kapazität der Schutzschaltung mit den Gate- und Source-Anschlüssen des Transistors verbunden ist.

3. Steuervorrichtung (100, 200) nach Anspruch 1 oder 2, **dadurch gekennzeichnet, dass** die Schnellöffnungsanordnung Transistoren und Widerstände umfasst.

4. Steuervorrichtung (100, 200) nach einem der Ansprüche 1 bis 3, **dadurch gekennzeichnet, dass** die Vorrichtung einen Schalter umfasst, der so angebracht ist, dass er die Kondensatoranschlüsse der Schutzschaltung (112, 122; 212) selektiv kurzschließt.

5. Steuervorrichtung (100, 200) nach einem der Ansprüche 1 bis 4, **dadurch gekennzeichnet, dass** die Steuereinheit (140, 240) ein Mikrocontrollerelement umfasst.

6. Steuervorrichtung (100, 200) nach Anspruch 4 und 5, **dadurch gekennzeichnet, dass** das Mikrocontrollerelement so konfiguriert ist, dass es den Schalter schließt, um die Anschlüsse der Kapazität (C) der Schutzschaltung kurzzuschließen, wenn die Erfassungseinheit (130, 230) einen Wechsel des entsprechenden Eingangs in den nicht gespeisten Zustand erfasst.

7. Steuervorrichtung (100, 200) nach einem der Ansprüche 1 bis 6, **dadurch gekennzeichnet, dass** die Erfassungseinheit (130, 230) ein Mikrocontrollerelement umfasst, das so konfiguriert ist, dass es Befehle für das Lichtmodul über ein Bordnetz des Kraftfahrzeugs empfängt und interpretiert.

8. Steuervorrichtung (100, 200) nach einem der Ansprüche 1 bis 6, **dadurch gekennzeichnet, dass** die Erfassungseinheit eine elektronische Schaltung umfasst, die so konfiguriert ist, dass sie einen Abfall der elektrischen Stromstärke von einem Nicht-Null-Wert auf einen Null-Wert an mindestens einem Eingang der Steuervorrichtung (100, 200) erfasst.

9. Steuervorrichtung (100, 200) nach einem der Ansprüche 1 bis 8, **dadurch gekennzeichnet, dass** sie mindestens eine Wandlerschaltung (150, 250) zur Umwandlung des elektrischen Stroms, der einen der Eingänge der Vorrichtung speist, in einen elektrischen Strom geeigneter Stärke für die elektrische Versorgung mindestens einer Lichtquelle eines Lichtmoduls eines Kraftfahrzeugs umfasst.

10. Lichtmodul für ein Kraftfahrzeug mit mindestens einer Lichtquelle und einer Einrichtung zur Steuerung der elektrischen Versorgung der mindestens einen Lichtquelle, **dadurch gekennzeichnet, dass** die Steuervorrichtung einem der Ansprüche 1 bis 9 entspricht.

11. Lichtmodul nach Anspruch 10, **dadurch gekennzeichnet, dass** die mindestens eine Lichtquelle ein lichtemittierendes Halbleiterbauelement ist.

## Claims

1. A device (100, 200) for controlling the power supply to at least one light source (10) of a light module of a motor vehicle, comprising:
- at least a first (110, 210) and a second (120, 220) power supply input, each input being either in a powered or non-powered state, and at least one of the first and second inputs comprising a protection arrangement (112, 122; 212) against current reversals, the arrangement having at least one protection switch (Q1, Q2) and a capacitance (C) for generating a delay of a first duration in the change of state of said switch;
- a detection unit (130, 230) for detecting a change in the state of an input
- a control unit (140, 240) configured to control the opening of the at least one protection switch of an input (110, 210) when the detection unit detects a change of the corresponding input to the non-powered state,
the device being **characterized in that** at least one of the first and second inputs further comprises a fast opening arrangement (114, 124; 214) of the at least one protection switch, for selectively reducing the delay in the change of state of the at least one switch,
**in that** the control unit (140, 240) is configured to actuate the fast opening arrangement (114, 124; 214) when the sensing unit detects a change of the corresponding input to the non-powered state,
**in that** the duration of the delay is in the order of several milliseconds, and
**in that** the opening of the at least one protective switch by the control unit (140) reduces the delay in the change of state of the at least one protective switch to the order of several microseconds.

2. The control device (100, 200) according to claim 1, **characterized in that** the protection circuit (212) comprises at least one field effect transistor Q1, the capacitance of the protection circuit being connected to the gate and source terminals of the transistor.

3. The driver device (100, 200) of claim 1 or 2, **characterized in that** the fast opening arrangement comprises transistors and resistors.

4. The driving device (100, 200) according to any of claims 1 to 3, **characterized in that** the device comprises a switch mounted to selectively short the capacitance terminals of the protection circuit (112, 122; 212).

5. The control device (100, 200) according to any of claims 1 to 4, **characterized in that** the control unit (140, 240) comprises a microcontroller element.

6. The driving device (100, 200) according to claims 4 and 5, **characterized in that** the microcontroller element is configured to close said switch to short-circuit the terminals of said capacitance (C) of the protection arrangement when the detection unit (130, 230) detects a change of the corresponding input to the non-powered state.

7. The control device (100, 200) according to any of claims 1 to 6, **characterized in that** the sensing unit (130, 230) comprises a microcontroller element configured to receive and interpret commands for the light module on an on-board network of the motor vehicle.

8. A control device (100, 200) according to any of claims 1 to 6, **characterized in that** the sensing unit comprises an electronic circuit configured to detect a drop in the electric current intensity from a non-zero value to a zero value on at least one input of the control device (100, 200).

9. A control device (100, 200) according to one of claims 1 to 8, **characterized in that** it comprises at least one converter circuit (150, 250) for converting the electric current that feeds one of the inputs of the device into an electric current of suitable intensity for the electric supply of the at least one light source of a light module of a motor vehicle.

10. A light module for a motor vehicle comprising at least one light source and a device for controlling the electrical supply to said at least one light source, **characterized in that** the control device is in accordance with one of claims 1 to 9.

11. The light module of claim 10, wherein the at least one light source is a light-emitting semiconductor component.
